# EUROPÄISCHE PATENTSCHRIFT

(11) **EP 2 146 198 B1**
(45) Veröffentlichungstag und Bekanntmachung des Hinweises auf die Patenterteilung: **12.09.2012**
(21) Anmeldenummer: 09008969.9
(22) Anmeldetag: 09.07.2009
(51) Int. Cl.: G01N 22/00, A24C 5/34

(54) **Verfahren und Vorrichtung zur Messung der Beladung eines Stranges der Tabak verarbeitenden Industrie mit einer Stoffmenge**
Method and device for measuring the loading of a string in the tobacco-processing industry with a quantity of materials
Procédé et dispositif de mesure du chargement d'un faisceau de l'industrie de traitement du tabac à l'aide d'une quantité de matière

(30) Priorität: 14.07.2008 DE 102008032835
(43) Veröffentlichungstag der Anmeldung: 20.01.2010
(73) Patentinhaber: Hauni Maschinenbau Aktiengesellschaft, 21033 Hamburg (DE)
(72) Erfinder: Hohenstein, Norbert, 21481 Lauenburg (DE)
(74) Vertreter: Seemann, Ralph

(56) Entgegenhaltungen:
- EP-A1- 0 889 321
- EP-A1- 1 895 291
- DE-A1-102004 017 597
- DE-A1-102004 063 228
- DE-U1-202006 020 481
- JP-A- 2008 139 288

## Beschreibung

Die Erfindung betrifft ein Verfahren zum Messen der Beladung eines Strangs der Tabak verarbeitenden Industrie mit einem Zusatz, eine Vorrichtung zur Messung der Beladung eines Strangs der Tabak verarbeitenden Industrie mit einem Zusatz sowie die Verwendung eines Hohlleiters zur Messung der Beladung eines Strangs der Tabak verarbeitenden Industrie mit einem Zusatz.

Im Rahmen der Erfindung wird unter einem Strang der Tabak verarbeitenden Industrie ein in einer Strangmaschine hergestellter Filterstrang oder Tabakstrang, insbesondere mit einem Umhüllungsstreifen versehen, verstanden. In diesem Zusammenhang ist es erforderlich, dass für eine gleich bleibende Qualität des Tabakstrangs oder des Filterstrangs die Materialeigenschaften des Strangs konstant bleiben. Dies wird durch Detektoren oder Messeinrichtungen überwacht, durch die hindurch oder an denen vorbei ein Strang der

Tabak verarbeitenden Industrie gefördert wird.

DE 2 206 656 A offenbart einen Mikrowellen-Massendetektor, mit dem die Dichte eines Tabakstrangs in einer einen durchlaufenden Tabakstrang erzeugenden Zigarettenmaschine überwacht wird, das heißt, es wird die Massenbelegung pro Längeneinheit des Tabakstrangs überwacht. Das Messsignal wird für die Steuerung der Zufuhr von Tabak und/oder für die Steuerung der Zurichtvorrichtungen in Abhängigkeit von der beobachteten Dichte verwendet.

Bei der Vorrichtung gemäß DE 2 206 656 ist eine mikrowellenabstrahlende Quelle vorgesehen, ein Detektor für diese Strahlung und ein Wellenleiter für die Führung der Strahlung von der Quelle zum Detektor hin, wobei der Wellenleiter einen Abschnitt von so geringem Querschnitt aufweist, dass die Strahlung in diesen Abschnitt in der abklingenden Mode ("evanescent mode") eindringt. In diesem Fall findet allerdings keine Leitung durch Totalreflexion des Mikrowellenfelds im Wellenleiter statt. Durch Bereitstellung einer geeigneten Kapazität mittels Abstimmungsschrauben wird in diesem Abschnitt jedoch eine vollständige Transmission der Mikrowellenenergie über ein schmales Frequenzband erreicht. Diese Vorrichtung entspricht somit einem schmalbandigen Frequenzfilter.

Der Abschnitt des Wellenleiters mit geringem Querschnitt weist mit Öffnungen versehene Wände für die Bewegung des Stranges durch den Strahlungspfad auf. Das Ausgangssignal des Detektors wird von jeder Änderung der Dichte des Tabakstrangs beeinflusst. Die Änderung besteht in einer Abschwächung, die ihre Ursache in der Absorption von Strahlung durch den Tabak und/oder durch die Verstimmung des Hohlleiters haben kann, d.h. durch die Änderung des "Q"-Faktors des Wellenleiters in Gegenwart des Tabaks.

Gemäß EP 1 241 469 A2 ist bei einer Mikrowellenresonatoreinrichtung für die Prüfung eines Materialstroms der Tabak verarbeitenden Industrie auf Vorhandensein eines Fremdmaterials und/oder für die Erfassung der Masse, Dichte und/oder der Feuchte des Materials ein Resonatorgehäuse mit einer Durchtrittsöffnung für die Materialmenge vorgesehen. Die Resonatoreinrichtung umfasst wenigstens ein die Energiedichte von elektromagnetischen Wellen vergrößerndes Element. Hierdurch wird die Energiedichte des Mikrowellenfelds am Ort des Strangs punktuell vergrößert und dadurch die Empfindlichkeit und Ortsauflösung der Messung gesteigert, so dass auch sehr kleine Fremdkörper erkannt werden.

Aus EP1895291 ist die Verwendung eines Mikrowellenresonators zur Messung der Beladung eines Filterstrangs mit Weichmacher bekannt.

Aus DE 10 2004 017 597 A1 ist ein Resonatorgehäuse für Mikrowellen zur Erfassung wenigstens einer Eigenschaft eines Strangs der Tabak verarbeitenden Industrie bekannt. In dem Resonatorgehäuse sind eine Einkopplungsantenne und eine Auskopplungsantenne für Mikrowellen angeordnet, wobei die die Formgebung des Resonators wesentlich bestimmenden Teile des Gehäuses wenigstens teilweise aus nicht metallischem Material bestehen.

Aus DE 20 2006 020 481 U1 ist eine Mikrowellenmessvorrichtung zur Bestimmung mindestens einer Messgröße an einem Produkt bekannt. Die Mikrowellenmessvorrichtung umfasst einen Hohlraumresonator, in dem sich ein stehendes elektrisches Mikrowellenfeld ausbildet, der eine Labyrinthstruktur aufweist, die eine Verlängerung der elektrischen Länge relativ zu einer mittleren Resonatorausdehnung bewirkt.

Mit den bekannten Vorrichtungen werden die Dichte oder der Feuchtigkeitsgehalt eines Stranges der Tabak verarbeitenden Industrie gemessen sowie das punktuelle Vorhandensein von Fremdkörpern im Strang. Diese Vorrichtungen sind jedoch nicht dafür optimiert, die Beladung eines Strangs der Tabak verarbeitenden Industrie mit einer Stoffmenge effektiv zu messen, wobei die Stoffmenge entweder gleichmäßig im Strang der Tabak verarbeitenden Industrie verteilt ist oder durch produktionsbedingte Variationen periodisch oder unregelmäßig variieren kann. Beispiele für solche Beladungen sind die Zugabe von Geschmacks- oder Aromastoffen oder anderen Zusätzen zu einem Tabakstrang, sowie die Zugabe von Weichmachern, wie Triacetin, oder von filteraktiven Stoffen, wie Aktivkohle, beispielsweise in Pulver- oder Granulatform, zu einem Filterstrang.

Es ist daher die Aufgabe der vorliegenden Erfindung, ein Verfahren und eine Vorrichtung zum Messen der Beladung eines Strangs der Tabak verarbeitenden Industrie mit einer Stoffmenge anzugeben, mittels deren die Beladung schnell und trennscharf von der allgemeinen Dichte und anderen allgemeinen Parametern des Stranges unterschieden werden kann.

Diese Aufgabe wird gelöst durch ein Verfahren zum Messen der Beladung eines Strangs der Tabak verarbeitenden Industrie, insbesondere eines Filterstrangs, mit einem Zusatz und/oder Weichmacher und/oder Aktivkohle, bei dem der Strang durch einen Hohlleiter geführt wird, der durch den Strang durchsetzt wird, mit den folgenden Schritten:
- Einkoppeln eines elektromagnetischen Wechselfeldes in den Hohlleiter mittels einer Einkopplungsvorrichtung, wobei die Frequenz des elektromagnetischen Wechselfeldes in Bezug auf die Dimensionen des Hohlleiters so groß ist, dass eine Weiterleitung durch Totalreflexion im Hohlleiter stattfindet,
- Auskoppeln des elektromagnetischen Wechselfeldes aus dem Hohlleiter mittels einer Auskopplungsvorrichtung,
- Messen der Absorption des elektromagnetischen Wechselfeldes durch den Strang.

Wie im Stand der Technik auch, wird das eingekoppelte elektromagnetische Wechselfeld durch die Anwesenheit des Strangs der Tabak verarbeitenden Industrie abgeschwächt und die Abschwächung gemessen. Durch die Verwendung eines Hohlleiters zur Leitung des elektromagnetischen Wechselfeldes durch Totalreflexion, im Gegensatz zur abklingenden Mode, wird im Gegensatz zu den bekannten Vorrichtungen eine größere Flexibilität und Trennschärfe für die Beladung mit einem Zusatz und/oder Weichmacher und/oder Aktivkohle bzw. einer Stoffmenge eines Zusatzes und/oder Weichmachers und/oder Aktivkohle erreicht.

Das erfindungsgemäße Verfahren gibt beispielsweise für den Fall einer Beladung eines Acetat-Filterstrangs mit Aktivkohle in Granulat- oder Pulverform bei geeigneter Wahl der Messparameter einen Signalhub, der etwa um einen Faktor 50 größer ist als der Signalhub, der aus der Dichteschwankung des Filterstrangs selber resultiert. Damit ist es möglich, die Beladung beispielsweise eines Filterstrangs mit Aktivkohle auf besser als 1 mg/mm zu bestimmen und Teile des Filterstranges, deren Beladung mit Aktivkohle außerhalb eines vorbestimmten erwünschten Bereichs liegt, zu verwerfen.

Erfindungsgemäß ist das elektromagnetische Wechselfeld ein Mikrowellenfeld, insbesondere mit einer Frequenz von 5 bis 9 GHz, insbesondere von 5,1 bis 6,8 GHz. Dieser Bereich ist besonders sensitiv auf die Anwesenheit von beispielsweise Aktivkohle, aber auch Weichmacher, wie beispielsweise Triacetin. Unter Aktivkohle wird im Rahmen der vorliegenden Erfindung insbesondere Aktivkohle in Granulat- oder Pulverform verstanden.

Erfindungsgemäß entspricht die Frequenz des elektromagnetischen Wechselfeldes keiner Resonanzmode. In diesem Fall ist der Frequenzgang, d.h. das Transmissionsverhalten des Hohlleiters, über einen breiten Frequenzbereich sehr flach. Innerhalb dieses Frequenzbereichs ist die Frequenz sehr flexibel für ideale Messbedingungen bei verschiedene Strangdicken, -dichten, -materialien und die Arten und Beladungsdichten der Stoffmengen einstellbar. In diesem Bereich tritt das Problem nicht oder kaum auf, dass die Messung instabil wird, weil keine Resonanzmode mit steilen Flanken eingestellt ist, so dass Drifts in den Messparametern und Messbedingungen zu starken Signalschwankungen führen können.

Eine gute Entkopplung von äußeren Störeinflüssen wird erreicht, wenn das elektromagnetische Wechselfeld über einen Isolator, insbesondere einen Zirkulator, eingekoppelt wird.

Vorteilhafterweise wird das elektromagnetische Wechselfeld über einen Richtkoppler eingekoppelt, wobei insbesondere im Richtkoppler ein Teil des elektromagnetischen Wechselfelds abgezweigt wird und als Referenz vom Richtkoppler zu einer Messeinrichtung geführt wird. Auf diese Weise ist es möglich, das zunächst erzeugte Signal, etwa eine sinusförmige Wechselspannung bzw. ein sinusförmiges Wechselfeld, aufzuspalten und einen Teil anderweitig zu nutzen. Der abgezweigte Teil wird zur Stabilisierung der Frequenz und/oder der Amplitude an den Frequenzgenerator rückgekoppelt und/oder als Referenzsignal verwendet, an dem die Abschwächung des den Hohlleiter durchlaufenden elektromagnetischen Wechselfeldes durch den Strang gemessen wird.

Durch diesen Vergleich, bei dem vorzugsweise das aus dem Hohlleiter ausgekoppelte elektromagnetische Wechselfeld zur Messung der Absorption mit dem im Richtkoppler abgezweigten Teil des elektromagnetischen Wechselfeldes verglichen wird, werden Temperaturschwankungen oder Drifts des Generators ausgeglichen.

Das elektromagnetische Wechselfeld wird vorzugsweise mittels Koaxial-Antennen in den Hohlleiter ein- und ausgekoppelt, wobei die Koaxial-Hohlleiterauskopplung um 0° oder 180° gegenüber der Koaxial-Hohlleitereinkopplung gedreht ist. Im Fall von 0° weisen beide Koaxial-Antennen in die gleiche Richtung, wobei sie jedoch gegeneinander versetzt angeordnet sind. Bei einer Drehung um 180° sind sie ebenfalls versetzt angeordnet, weisen jedoch in entgegengesetzte Richtungen. Auf diese Weise sind die Koaxial-Antennen gegenphasig angeordnet.

Vorzugsweise wird die gemessene Absorption in eine Beladung des Strangs mit einer Stoffmenge umgerechnet.

Die der Erfindung zugrunde liegende Aufgabe wird ebenfalls gelöst durch eine Vorrichtung zur Messung der Beladung eines Strangs der Tabak verarbeitenden Industrie, insbesondere eines Filterstrangs, mit einem Zusatz und/oder Weichmacher und/oder Aktivkohle, umfassend einen Hohlleiter, eine Einkopplungsvorrichtung zum Einkoppeln eines elektromagnetischen Wechselfelds in den Hohlleiter und eine Auskopplungsvorrichtung für das elektromagnetische Wechselfeld, wobei die Dimensionen des Hohlleiters in Bezug auf die Frequenz eines elektromagnetischen Wechselfeldes so groß sind, dass eine Weiterleitung durch Totalreflexion im Hohlleiter stattfindet, wenn das elektromagnetische Wechselfeld ein Mikrowellenfeld mit einer Frequenz von 5 GHz bis 9 GHz ist, wobei die Frequenz des elektromagnetischen Wechselfeldes keiner Resonanzmode entspricht, wobei der Hohlleiter wenigstens eine Öffnung und/oder wenigstens ein Rohr aufweist, durch den bzw. das der Strang längsaxial bewegbar ist, wobei der Hohlleiter ein Rechteckhohlleiter ist, wobei die lange Seite des rechteckigen Hohlleiters eine Länge von 30 mm bis 40 mm, insbesondere 34,84 mm, hat und wobei die kurze Seite des rechteckigen Hohlleiters eine Länge von 13 mm bis 19 mm, insbesondere 15,76 mm, hat.

Bei der erfindungsgemäßen Vorrichtung sind die Dimensionen des Hohlleiters größer als die Wellenlänge des elektromagnetischen Wechselfelds, so dass das elektromagnetische Wechselfeld mittels Totalreflexion im Hohlleiter geleitet wird und nicht in einer abklingenden Mode. Dabei ist das elektromagnetische Wechselfeld erfindungsgemäß ein Mikrowellenfeld mit einer Frequenz von 5 bis 9 GHz, insbesondere von 5,1 bis 6,8 GHz.

In der erfindungsgemäßen Vorrichtung ist der Hohlleiter ein Rechteck-Hohlleiter.

Die lange Seite des rechteckigen Hohlleiters hat eine Länge von 30 mm bis 40 mm, insbesondere 34,84 mm. Die kurze Seite des rechteckigen Hohlleiters hat eine Länge von 13 mm bis 19 mm, insbesondere 15,76 mm. Diese Geometrie ist besonders leitfähig für den Frequenzbereich zwischen 5 und 9 GHz. Die genauen Abmessungen sind an die erforderlichen Umgebungsbedingungen in der

Strangherstellungsmaschine anzupassen.

In einer vorteilhaften Ausbildung bildet der Hohlleiter, insbesondere zusammen mit der Einkopplungsvorrichtung und/oder der Auskopplungsvorrichtung, einen geschlossenen Raum für das elektromagnetische Wechselfeld.

Erfindungsgemäß entspricht die Frequenz des elektromagnetischen Wechselfeldes keiner Resonanzmode. Hierdurch wird eine große Flexibilität erreicht, da eine flache Transmissionskurve des Hohlleiters in einem breiten Frequenzbereich nutzbar ist. Der Hohlleiter bzw. die Vorrichtung sind dann mit nur geringem Aufwand auf andere Strang- und Beladungsmaterialien und -dichten anpassbar.

Vorzugsweise wird eine Frequenz verwendet, bei der sich eine besonders hohe Feldstärke des Wechselfeldes in der Mitte der breiten Seite des Hohlleiters befindet. In diesem Fall ist vorteilhafterweise die wenigstens eine Öffnung bzw. das wenigstens eine Rohr, insbesondere mittig, in einer Seite des Hohlleiters angeordnet ist, wobei die Richtung der elektrischen Komponente des elektromagnetischen Wechselfeldes parallel zur Längsachse des Stranges ist. Diese Anordnung führt zu einer besonders konzentrierten Absorption des elektromagnetischen Wechselfeldes im Strang.

Vorzugsweise umfasst die Einkopplungsvorrichtung einen Isolator, insbesondere einen Zirkulator. Weiter vorzugsweise umfasst die Einkopplungsvorrichtung einen Richtkoppler, wobei insbesondere im Richtkoppler ein Teil des elektromagnetischen Wechselfelds abgezweigt wird. Vorteilhafterweise ist eine Messeinrichtung zur Messung des ausgekoppelten Felds vorgesehen, wobei insbesondere ein Teil des elektromagnetischen Feldes als Referenz zu der Messeinrichtung geführt wird.

Die Einkopplungsvorrichtung umfasst vorzugweise eine Koaxial-Hohlleitereinkopplung und/oder die Auskopplungsvorrichtung eine Koaxial-Hohlleiterauskopplung, wobei insbesondere die Koaxial-Hohlleiterauskopplung gegenüber der Koaxial-Hohlleitereinkopplung um 0° oder 180° verdreht ist. In dieser Anordnung hat die Koaxial-Hohlleiterauskopplung die maximale Sensitivität für das durch die Koaxial-Hohlleitereinkopplung in den Hohlleiter eingeführte elektromagnetische Wechselfeld.

Die der Erfindung zugrunde liegende Aufgabe wird ebenfalls durch eine Maschine, insbesondere eine Strangmaschine, der Tabak verarbeitenden Industrie gelöst, mit einer erfindungsgemäßen Vorrichtung wie oben beschrieben. Die erfindungsgemäße Vorrichtung kann in eine bestehende Maschine oder Strangmaschine eingebaut werden, insbesondere anstelle vorhandener Messvorrichtungen.

Die der Erfindung zugrunde liegende Aufgabe wird ferner gelöst durch die Verwendung eines Hohlleiters zur Messung der Beladung eines Strangs der Tabak verarbeitenden Industrie, insbesondere eines Filterstrangs, mit einem Zusatz und/oder Weichmacher und/oder Aktivkohle, in einem erfindungsgemäßen Verfahren wie oben beschrieben und/oder in einer erfindungsgemäßen Vorrichtung wie oben beschrieben, sowie durch die Verwendung einer erfindungsgemäßen Vorrichtung in einer Maschine, insbesondere Strangmaschine, der Tabak verarbeitenden Industrie.

Zur Vermeidung von Wiederholungen wird auf die vorstehenden Ausführungen verwiesen.

Die Erfindung wird nachstehend ohne Beschränkung des allgemeinen Erfindungsgedankens anhand von Ausführungsbeispielen unter

Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische schräge Aufsicht auf einen erfindungsgemäßen Hohlleiter,
- Fig. 2: eine schematische Schrägansicht auf eine Einkopplungsvorrichtung,
- Fig. 3: eine schematische Schrägdarstellung einer erfindungsgemäßen Vorrichtung,
- Fig. 4: eine Schaltanordnung in schematischer Darstellung und
- Fig. 5: eine Schaltanordnung für ein erfindungsgemäßes Doppelstrang-Messsystem.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

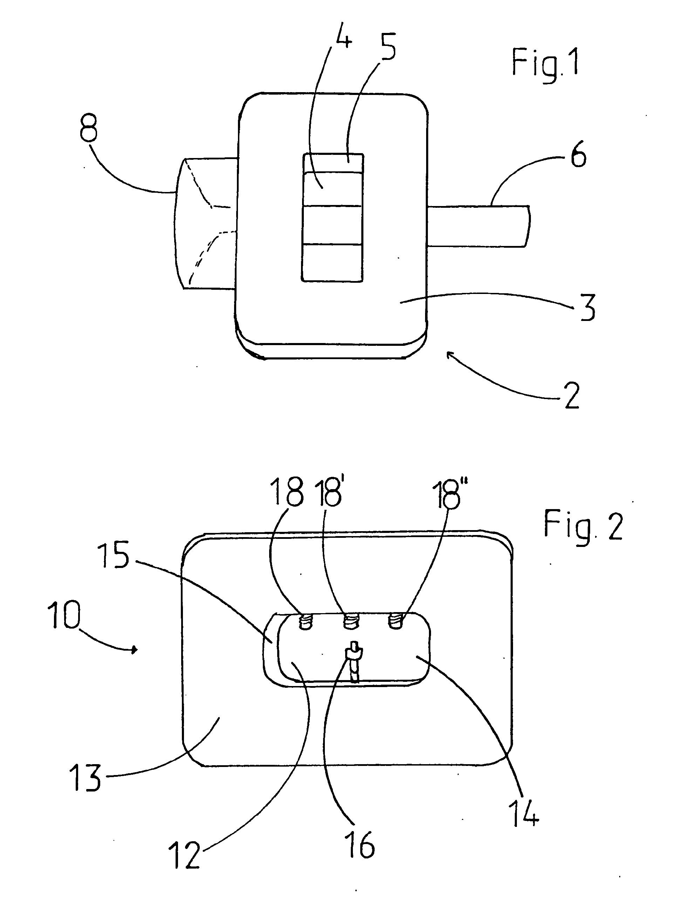

In Fig. 1 ist ein erfindungsgemäßer Hohlleiter 2 mit einem Hohlraum 4 mit rechteckigem Querschnitt dargestellt. Es handelt sich um eine Schrägdarstellung, daher ist eine innere Seitenwand oder Seitenfläche 5 des Hohlraums 4 sichtbar. Durch die lange Seite des Hohlleiters 2 ist mittig ein Rohr 6 eingelassen, das auf der linken Seite in Fig. 1 in einen Trichter 8 mündet. Der Trichter 8 sorgt dafür, dass ein Strang der Tabak verarbeitenden Industrie, beispielsweise ein Tabakstrang oder ein Filterstrang, in das Rohr 6 eingefädelt wird, ohne dass es zu Beschädigungen des Strangs kommt. Die Frontfläche 3 dient zur Verbindung mit einer Einkopplungsvorrichtung und/oder einer Auskopplungsvorrichtung.

Im Hohlraum 4 des Hohlleiters 2 werden eingekoppelte elektromagnetische Wechselfelder, insbesondere Mikrowellen, geleitet bzw. transmittiert, wobei eine Transmissionsmode gewählt wird, die ein elektrisches Feld in Richtung des Rohrs 6 aufweist, das an der Position des Rohrs 6 eine maximale Feldstärke hat. Eine geeignete Transmissionsmode hat eine stark lokalisierte Feldstärke am Ort des Rohrs 6.

In Fig. 2 ist eine Einkopplungsvorrichtung 10 dargestellt, die eine Frontfläche 13 hat, wobei die Außen- und Innenmaße der Frontfläche 13 mit der Frontfläche 3 des Hohlleiters 2 aus Fig. 1 überstimmen, so dass der Hohlleiter 2 aus Fig. 1 mit der Frontfläche 13 der Einkopplungsvorrichtung 10 aus Fig. 2 an einer gemeinsamen Ebene verbindbar ist.

Die Einkopplungsvorrichtung 10 weist einen Hohlraum 12 mit Seitenwand 15 und Rückwand 14 auf, so dass der Hohlraum 12 nur nach einer Seite hin, in Blickrichtung des Betrachters, geöffnet ist. Aus der Seitenwand 15 ragen an einer Seite in diesem Hohlraum 12 eine Koaxial-Hohlleitereinkopplung 16 in Form einer KoaxialAntenne sowie von der anderen Seite eine oder mehrere, z.B. drei, Abstimmschrauben 18, 18', 18". Mittels der KoaxialHohlleitereinkopplung 16 können elektromagnetische Felder einstellbarer Frequenz in den Hohlraum 12 eingekoppelt werden, die im zusammengebauten Zustand durch den Hohlraum 4 des Hohlleiters 2 aus Fig. 1 weitergeleitet werden. Die elektrischen Feldvektoren sind parallel zur Koaxialantenne bzw. zur Koaxial-Hohlleitereinkopplung 16.

Eine Auskopplungsvorrichtung kann im Prinzip so aufgebaut sein wie die Einkopplungsvorrichtung 10 in Fig. 2, wobei Auskopplungsvorrichtung mit oder ohne Abstimmschrauben ausgebildet sein kann.

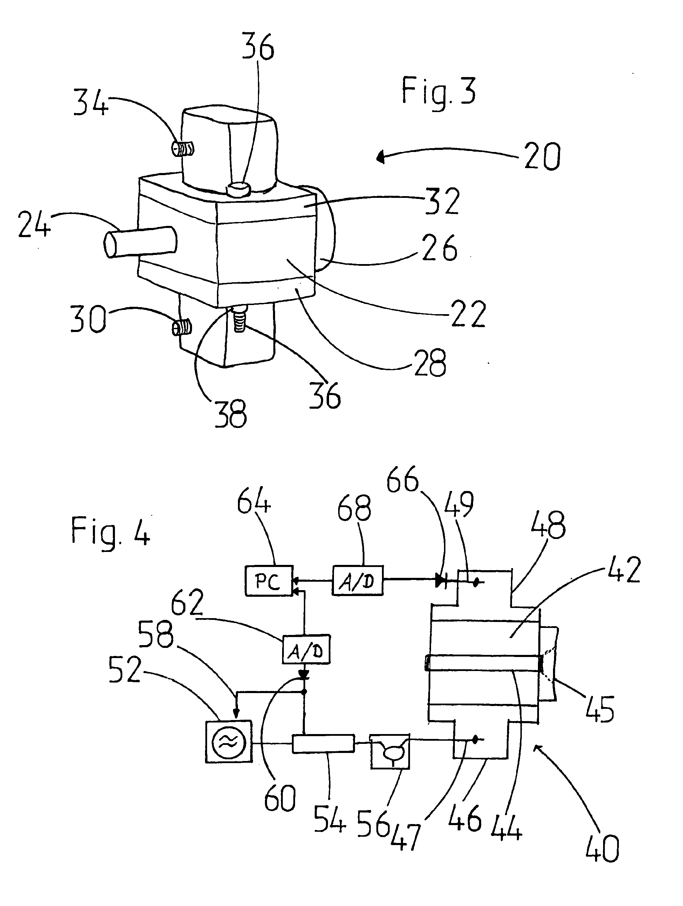

In Fig. 3 ist eine Vorrichtung 20 zur Beladungsmessung dargestellt, die aus den drei Komponenten Einkopplungsvorrichtung 28, Hohlleiter 22 und Auskopplungsvorrichtung 32 aufgebaut ist. Dabei ist der Hohlleiter 22 zwischen der Einkopplungsvorrichtung 28 und der Auskopplungsvorrichtung 32 angeordnet. Durch ein Rohr 24 und einen Trichter 26, die mittig und konzentrisch durch den Hohlleiter 22 verlaufen, wird ein Strang der Tabak verarbeitenden Industrie geführt wird (nicht dargestellt).

Die Einkopplungsvorrichtung 28 weist einen Koaxialanschluss 30 auf, der im Innern der Einkopplungsvorrichtung 28, wie in Fig. 2 dargestellt, in eine Koaxial-Hohlleitereinkopplung bzw. Koaxialantenne mündet. Die Auskopplungsvorrichtung 32 weist einen Koaxialanschluss 34 auf, der ebenfalls zu einer Koaxial-Hohlleiterauskopplung bzw. Koaxialantenne führt. Schematisch und beispielhaft ist eine Schraube 36 dargestellt, die am Rand die Einkopplungsvorrichtung 28, den Hohlleiter 22 und die Auskopplungsvorrichtung 32 durchsetzt und durch einen Gegenmutter 38 gesichert ist. Durch eine oder mehrere solcher Schrauben 36 und Gegenmuttern 38 wird die Vorrichtung 20 zusammengehalten.

Mit Einkopplungsvorrichtung 28, Hohlleiter 22 und Auskopplungsvorrichtung 32 bildet die erfindungsgemäße Vorrichtung 20 in dem Ausführungsbeispiel gemäß Fig. 3 einen geschlossenen Hohlraum. Die Frequenz des eingekoppelten Wechselfeldes wird erfindungsgemäß höher gewählt als die kleinste Frequenz, die im Hohlleiter 22 noch geleitet werden kann, ohne in die abklingenden Mode überzugehen, in der keine Transmission durch Totalreflexion mehr stattfindet. Sie entspricht aber nicht bzw. nicht notwendigerweise einer Resonanzfrequenz des Hohlraums.

Bei der Vorrichtung 20 gemäß Fig. 3 sind die als Koaxialantennen ausgebildeten Koaxial-Hohlleiterein- und -auskopplung gleichphasig angeordnet, was darin zum Ausdruck kommt, dass die Koaxialanschlüsse 30, 34 in die selbe Richtung weisen. Wenn, was ebenfalls möglich ist, die Auskopplungsvorrichtung 32 um die gemeinsame Achse um 180° gedreht ist, ist eine gegenphasige Ein- und Auskopplung realisiert.

In Fig. 4 ist eine Schaltanordnung mit einer erfindungsgemäßen Vorrichtung 40 dargestellt. Dabei entspricht die Vorrichtung 40 in schematischer Darstellung der in Fig. 3 gezeigten Vorrichtung 20. Die Vorrichtung 40 weist eine Einkopplungsvorrichtung 46 mit einer als Koaxialantenne ausgebildeten Koaxial-Hohlleitereinkopplung 47 sowie eine Auskopplungsvorrichtung 48 mit einer als Koaxialantenne ausgebildeten Koaxial-Hohlleiterauskopplung 49 auf, zwischen denen ein Hohlleiter 42 mit einem Rohr 44 und einem Trichter 45 angeordnet ist. Durch den Trichter 45 und das Rohr 44 wird, nicht dargestellt, ein Strang der Tabak verarbeitenden Industrie gefördert und seine Beladung mit Stoffmengen vermessen.

Ein Sinus-Generator 52 erzeugt eine sinusförmige Wechselspannung bzw. ein sinusförmiges elektromagnetisches Wechselfeld hoher Frequenz, vorzugsweise 5 bis 9 GHz, die bzw. das in einen Richtkoppler 54 eingespeist wird. Im Richtkoppler 54 wird das elektrische Wechselfeld aufgespalten und in einem Zweig über einen Zirkulator 56 zur Koaxial-Hohlleitereinkopplung 47 bzw. zur KoaxialAntenne der Einkopplungsvorrichtung 46 geführt. Damit wird das hochfrequente elektrische Wechselfeld in den Hohlleiter 42 eingekoppelt.

Ein abgezweigter und gedämpfter Teil des elektromagnetischen Wechselfelds wird zum Sinus-Generator 52 rückgekoppelt 58, um diesen in seiner Frequenz und/oder Amplitude zu stabilisieren. Außerdem wird mittels einer Messdiode 60 das erzeugte Wechselfeld gemessen und mittels eines Analog/Digital-Wandlers 62 erfasst und als Referenzsignal an einen Computer 64 weitergeleitet.

Im Hohlleiter 44 wird ein Teil des eingekoppelten elektromagnetischen Wechselfeldes durch den Strang der Tabak verarbeitenden Industrie absorbiert, so dass nur ein Teil des eingekoppelten elektromagnetischen Wechselfeldes durch die Koaxial-Hohlleiterauskopplung 49 in der Auskopplungsvorrichtung 48 wieder ausgekoppelt wird und mit einer Messdiode 66 gemessen wird. Die an der Messdiode 66 anliegende Spannung, die von der durch die Koaxial-Hohlleiterauskopplung 49 ausgekoppelte Energie abhängt, wird mittels eines Analog/Digital-Wandlers 68 erfasst und digitalisiert und an den Computer 64 weitergegeben. Im Computer 64 werden die Messwerte, die durch die Analog/Digital-Wandler 62 und 68 digitalisiert worden waren, miteinander verglichen und die Absorption des elektromagnetischen Wellenfeldes durch den Strang ermittelt.

In einer alternativen Ausführungsform, die einen einfacheren Aufbau aufweist, wird auf den Referenzwert, der mittels der Diode 60 und des Analog/Digital-Wandlers 62 gemessen wird, verzichtet. Die Leistung des Generators wird dabei durch geeignete Maßnahmen konstant gehalten. In diesem Fall empfängt der Computer 64 lediglich einen Messwert vom Analog/Digital-Wandler 68, d.h. alleine von der ausgekoppelten Energie aus der Auskopplungsvorrichtung 48.

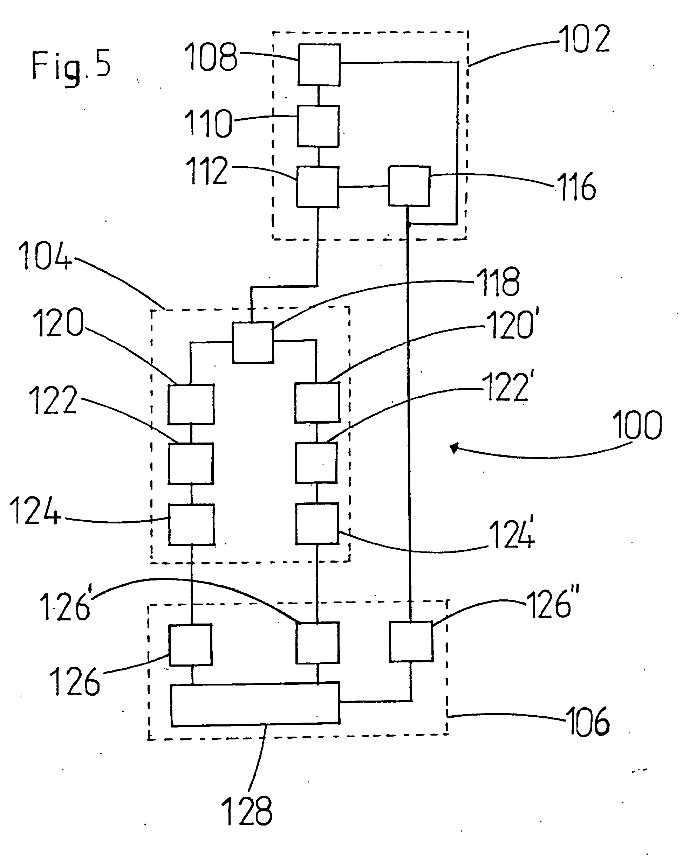

In Fig. 5 ist eine erfindungsgemäße Schaltanordnung 100 für eine Doppelstrang-Messung der Beladung zweier Stränge der Tabak verarbeitenden Industrie mit Stoffmengen dargestellt. Die Schaltanordnung 100 umfasst eine Generatoranordnung 102, eine Hohlleiteranordnung 104 und eine Messanordnung 106, deren funktionale Einheiten gestrichelt umrandet sind.

Die Generatoranordnung 102 umfasst einen Sinus-Generator 108, der eine hochfrequente elektrische Wechselspannung bzw. elektromagnetisches Wechselfeld generiert, die bzw. das an einen Ausgangsfilter 110 weitergeleitet wird. Das Ausgangssignal aus dem ausgangsfilter 110 wird zu einem Richtkoppler 112 geführt. Vom Richtkoppler 112 wird ein Anteil der Signalleistung zu einem Detektor 116, der die Wechselspannung detektiert und an den Analog/Digital-Wandler 126" der Messanordnung 106 weiterleitet, geführt. Das Ausgangssignal des Detektors 116 wird zum Sinus-Generator 108 in einer Art Rückkopplungsschleife zur Leistungsregelung des Sinus-Generators 108 zurückgeführt.

Der Hauptteil des elektromagnetischen hochfrequenten Wechselfelds wird vom Richtkoppler 112 an einen Splitter 118 der Hohlleiteranordnung 104 geleitet, in dem das Wechselfeld zu gleichen Teilen aufgeteilt wird. Die beiden aufgespaltenen Teile des Wechselfelds werden an, insbesondere gleiche oder gleichartige, Hohlleiter 120, 120' geleitet, die beispielsweise denen in Fig. 3 dargestellten Hohlleiter entsprechen können. Diese Hohlleiter 120, 120' werden jeweils von einem Strang der Tabak verarbeitenden Industrie durchsetzt (nicht dargestellt), so dass eine parallele Messung der beiden Stränge stattfindet. Die ausgekoppelte Energie des elektromagnetischen Wechselfeldes wird in zwei parallelen Signalverarbeitungssträngen durch Tiefpassfilter 122, 122' gefiltert und an Detektoren 124, 124' weitergegeben. Die Detektoren 124, 124', ebenso wie der Detektor 116, können z.B. RX-Dioden sein. Anstelle eines Generators und eines Splitters 118 kann für jeden Strang ein separater Generator vorgesehen sein.

Die von den Detektoren 124, 124' erzeugten Signale werden mittels Analog/Digital-Wandlern 126, 126' digitalisiert und an einen Computer 128 weitergeleitet, ebenso wie das digitalisierte Referenzsignal aus der Generatoranordnung 102. Diese Anordnung lässt sich auch auf weitere Stränge ausweiten. Der Computer 128 wertet die Signale aus den Analog/Digital-Wandlern 126, 126' und 126" aus, wobei jeweils aus dem Vergleich der Werte aus den Analog/Digital-Wandlern 126 und 126' mit dem Wert aus dem Analog/DigitalWandler 126" anhand der bekannten Kennlinien der Detektoren die Absorption durch die parallelen Stränge errechnet wird. Aus der errechneten Absorption wird die Beladung der Stränge mit einer oder mehreren Stoffmengen errechnet.

Mittels des erfindungsgemäßen Verfahrens und der erfindungsgemäßen Vorrichtung mit einem Hohlleiter mit rechteckigem Querschnitt, deren lange Seite eine Länge von 34,84 mm und deren kurze Seite eine Länge von 15,76 aufwies, haben Versuche mit Filtersträngen, die mit Aktivkohlegranulat beladen waren, gute Trennschärfeergebnisse erzielt. Es wurden jeweils Acetatfaser-Filterstränge mit und ohne Beladung mit Aktivkohlegranulat vermessen. Die Kohlebeladung wurde bei Filtersträngen mit 5 mm Durchmesser zwischen 0 und 1,4 mg/mm variiert, bei Filtersträngen mit 7,5 mm Durchmesser 0 und ca. 18 mg/mm. Die verwendeten Frequenzen, mit denen das elektromagnetische Wechselfeld in den Hohlleiter eingekoppelt worden war, betrugen 5,8 GHz und 6,5 GHz. Es können auch Frequenzen bis 12 GHz verwendet werden. In beiden Fällen wurde gefunden, dass die Absorptionsmessung leicht von der Dichte des Acetatstrangs abhängig war. Eine deutlich stärkere Abhängigkeit der Absorption von der Beladung mit Aktivkohlegranulat wurde jedoch festgestellt, wobei der Faktor zwischen dem beladungsabhängigen Signalhub und dem dichteabhängigen Signalhub bis zu 47,6 betrug. Die erfindungsgemäße Anordnung bzw. Vorrichtung ist somit um einen Faktor von etwa 50 sensitiver auf die Beladung des Strangs der Tabak verarbeitenden Industrie mit Aktivkohle als auf die Dichte des Acetatstrangs selber.

Die Empfindlichkeit der erfindungsgemäßen Vorrichtung reicht aus, um die Beladung eines Strangs der Tabak verarbeitenden Industrie mit einer Stoffmenge, insbesondere eines Filterstrangs mit Aktivkohlegranulatbeladung, zu messen, wobei überwacht werden kann, ob die Beladung sich in vorgegebenen Grenzen bewegt. Es ist auch möglich, bei Multisegmentfiltersträngen die Filtersegmente anhand ihrer Signale in der erfindungsgemäßen Vorrichtung voneinander zu unterscheiden.

Die erfindungsgemäßen Messvorrichtung erfordern keine Neukonstruktion von Strangmaschinen der Tabak verarbeitenden Industrie, sondern können, da sie nur wenig Platz erfordern, in vorhandene Strangmaschinen an die Stelle vorhandener Vorrichtungen eingebaut werden.

### Bezugszeichenliste

- 2: Hohlleiter
- 3: Frontfläche
- 4: Hohlraum
- 5: Seitenwand
- 6: Rohr
- 8: Trichter
- 10: Einkopplungsvorrichtung
- 12: Hohlraum
- 13: Frontfläche
- 14: Rückwand
- 15: Seitenwand
- 16: Koaxial-Hohlleitereinkopplung
- 18-18": Abstimmschrauben
- 20: Vorrichtung zur Beladungsmessung
- 22: Hohlleiter
- 24: Rohr
- 26: Trichter
- 28: Einkopplungsvorrichtung
- 30: Koaxialanschluss
- 32: Auskopplungsvorrichtung
- 34: Koaxialanschluss
- 36: Schraube
- 38: Gegenmutter
- 40: Vorrichtung
- 42: Hohlleiter
- 44: Rohr
- 45: Trichter
- 46: Einkopplungsvorrichtung
- 47: Koaxial-Hohlleitereinkopplung
- 48: Auskopplungsvorrichtung
- 49: Koaxial-Hohlleiterauskopplung
- 52: Sinus-Generator
- 54: Richtkoppler
- 56: Zirkulator
- 58: Rückkopplung
- 60: Diode
- 62: Analog/Digital-Wandler
- 64: Computer
- 66: Diode
- 68: Analog/Digital-Wandler
- 100: Schaltanordnung
- 102: Generatoranordnung
- 104: Hohlleiteranordnung
- 106: Messanordnung
- 108: Sinus-Generator
- 110: Ausgangsfilter
- 112: Richtkoppler
- 116: Detektor
- 118: Splitter
- 120, 120': Hohlleiter
- 122, 122': Tiefpassfilter
- 124, 124': Detektor
- 126 - 126": Analog/Digital-Wandler
- 128: Computer

## Patentansprüche

1. Verfahren zum Messen der Beladung eines Strangs der Tabak verarbeitenden Industrie, insbesondere eines Filterstrangs, mit einem Zusatz und/oder Weichmacher und/oder Aktivkohle, bei dem der Strang durch einen Hohlleiter (2, 22, 42; 120, 120') geführt wird, der durch den Strang durchsetzt wird, mit den folgenden Schritten:
- Einkoppeln eines elektromagnetischen Wechselfeldes in den Hohlleiter (2, 22, 42; 120, 120') mittels einer Einkopplungsvorrichtung (10, 28, 46, 47), wobei die Frequenz des elektromagnetischen Wechselfeldes in Bezug auf die Dimensionen des Hohlleiters (2, 22, 42; 120, 120') so groß ist, dass eine Weiterleitung durch Totalreflexion im Hohlleiter (2, 22, 42; 120, 120') stattfindet,
- Auskoppeln des elektromagnetischen Wechselfeldes aus dem Hohlleiter (2, 22, 42; 120, 120') mittels einer Auskopplungsvorrichtung (32, 48, 49;),
- Messen der Absorption des elektromagnetischen Wechselfeldes durch den Strang, wobei das elektromagnetische Wechselfeld ein Mikrowellenfeld ist, insbesondere mit einer Frequenz von 5 bis 9 GHz, insbesondere von 5,1 bis 6,8 GHz, wobei die Frequenz des elektromagnetischen Wechselfeldes keiner Resonanzmode entspricht.

2. Verfahren nach Anspruch 1, **dadurch gekennzeichnet, dass** das elektromagnetische Wechselfeld über einen Isolator, insbesondere einen Zirkulator (56), eingekoppelt wird.

3. Verfahren nach Anspruch 1 oder 2, **dadurch gekennzeichnet, dass** das elektromagnetische Wechselfeld über einen Richtkoppler (54, 112) eingekoppelt wird, wobei insbesondere im Richtkoppler (54, 112) ein Teil des elektromagnetischen Wechselfelds abgezweigt wird und als Referenz vom Richtkoppler (54, 112) zu einer Messeinrichtung (60, 62, 64) geführt wird, wobei insbesondere das aus dem Hohlleiter (2, 22, 42; 120, 120') ausgekoppelte elektromagnetische Wechselfeld zur Messung der Absorption mit dem im Richtkoppler (54, 112) abgezweigten Teil des elektromagnetischen Wechselfeldes verglichen wird, wobei insbesondere das elektromagnetische Wechselfeld im Hohlleiter (2, 22, 42; 120, 120') mittels einer Koaxial-Hohlleiterauskopplung (49) ausgekoppelt wird, die um 0° oder 180° gegenüber einer Koaxial-Hohlleitereinkopplung (16, 47) gedreht ist.

4. Verfahren nach einem der Ansprüche 1 bis 3, **dadurch gekennzeichnet, dass** die gemessene Absorption in eine Beladung des Strangs mit einer Stoffmenge umgerechnet wird.

5. Vorrichtung (20) zur Messung der Beladung eines Strangs der Tabak verarbeitenden Industrie, insbesondere eines Filterstrangs, mit einem Zusatz und/oder Weichmacher und/oder Aktivkohle, umfassend einen Hohlleiter (2, 22, 42; 120, 120'), eine Einkopplungsvorrichtung (10, 28, 46, 47) zum Einkoppeln eines elektromagnetischen Wechselfelds in den Hohlleiter (2, 22, 42; 120, 120') und eine Auskopplungsvorrichtung (32, 48, 49) für das elektromagnetische Wechselfeld, wobei die Dimensionen des Hohlleiters (2, 22, 42; 120, 120') in Bezug auf die Frequenz eines elektromagnetischen Wechselfeldes so groß sind, dass eine Weiterleitung durch Totalreflexion im Hohlleiter (2, 22, 42; 120, 120') stattfindet, wenn das elektromagnetische Wechselfeld ein Mikrowellenfeld mit einer Frequenz von 5 bis 9 GHz, insbesondere von 5,1 bis 6,8 GHz ist, wobei die Frequenz des elektromagnetischen Wechselfeldes keiner Resonanzmode entspricht, wobei der Hohlleiter (2, 22, 42; 120, 120') wenigstens eine Öffnung und/oder wenigstens ein Rohr (6, 24, 44) aufweist, durch den bzw. das der Strang längsaxial bewegbar ist, wobei, der Hohlleiter (2, 22, 42; 120, 120') ein Rechteckhohlleiter (2, 22, 42; 120, 120') ist, wobei die lange Seite des rechteckigen Hohlleiters (2, 22, 42; 120, 120') eine Länge von 30 mm bis 40 mm, insbesondere 34,84 mm, hat und wobei die kurze Seite des rechteckigen Hohlleiters (2, 22, 42; 120, 120') eine Länge von 13 mm bis 19 mm, insbesondere 15,76 mm, hat.

6. Vorrichtung (20) nach Anspruch 5, **dadurch gekennzeichnet, dass** der Hohlleiter (2, 22, 42; 120, 120'), insbesondere zusammen mit der Einkopplungsvorrichtung (10, 28, 46, 47) und/oder der Auskopplungsvorrichtung (32, 48, 49), einen geschlossenen Raum für das elektromagnetische Wechselfeld bildet.

7. Vorrichtung (20) nach Anspruch 5 oder 6, **dadurch gekennzeichnet, dass** die wenigstens eine Öffnung bzw. das wenigstens eine Rohr (6, 24, 44), insbesondere mittig, in einer Seite des Hohlleiters (2, 22, 42; 120, 120') angeordnet ist, wobei die Richtung der elektrischen Komponente des elektromagnetischen Wechselfeldes parallel zur Längsachse des Stranges ist.

8. Vorrichtung (20) nach einem der Ansprüche 5 bis 7, **dadurch gekennzeichnet, dass** die Einkopplungsvorrichtung (10, 28, 46, 47) einen Isolator, insbesondere einen Zirkulator (56), umfasst, wobei insbesondere die Einkopplungsvorrichtung (10, 28, 46, 47) einen Richtkoppler (54, 112) umfasst, wobei insbesondere im Richtkoppler (54, 112) ein Teil des elektromagnetischen Wechselfelds abgezweigt wird.

9. Vorrichtung (20) nach einem der Ansprüche 5 bis 8, **dadurch gekennzeichnet, dass** eine Messeinrichtung (60 - 68; 116, 124, 124', 126 - 126", 128) zur Messung des ausgekoppelten Felds vorgesehen ist, wobei insbesondere ein abgezweigter Teil des elektromagnetischen Feldes als Referenz zu der Messeinrichtung (60 - 68; 116, 124, 124', 126 - 126", 128) geführt wird.

10. Vorrichtung (20) nach einem der Ansprüche 5 bis 9, **dadurch gekennzeichnet, dass** die Einkopplungsvorrichtung (10, 28, 46, 47) eine Koaxial-Hohlleitereinkopplung (16, 47) umfasst und/oder die Auskopplungsvorrichtung (32, 48, 49) eine Koaxial-Hohlleiterauskopplung (49) umfasst, wobei insbesondere die Koaxial-Hohlleiterauskopplung (49) gegenüber der Koaxial-Hohlleitereinkopplung (16, 47) um 0° oder 180° verdreht ist.

11. Maschine, insbesondere Strangmaschine, der Tabak verarbeitenden Industrie mit einer Vorrichtung nach einem der Ansprüche 5 bis 10.

12. Verwendung eines Hohlleiters (2, 22, 42; 120, 120') zur Messung der Beladung eines Strangs der Tabak verarbeitenden Industrie, insbesondere eines Filterstrangs, mit einem Zusatz und/oder Weichmacher und/oder Aktivkohle, in einem Verfahren nach einem der Ansprüche 1 bis 4.

13. Verwendung eines Hohlleiters (2, 22, 42; 120, 120') zur Messung der Beladung eines Strangs der Tabak verarbeitenden Industrie, insbesondere eines Filterstrangs, mit einem Zusatz und/oder Weichmacher und/oder Aktivkohle, insbesondere nach Anspruch 12, in einer Vorrichtung (20) nach einem der Ansprüche 5 bis 10.

14. Verwendung einer Vorrichtung nach einem der Ansprüche 5 bis 10 in einer Maschine, insbesondere Strangmaschine, der Tabak verarbeitenden Industrie, insbesondere nach Anspruch 11.

## Claims

1. Method for measuring the loading of a strand in the tobacco-processing industry, in particular a filter strand, with an additive and/or plasticiser and/or activated carbon, in which the strand is led through a hollow conductor (2, 22, 42; 120, 120') through which the strand is passed, with the following steps:
- coupling of an electromagnetic alternating field into the hollow conductor (2, 22, 42; 120, 120') by means of a coupling device (10, 28, 46, 47), wherein the frequency of the electromagnetic alternating field is so great with regard to the dimensions of the hollow conductor (2, 22, 42; 120, 120') that forwarding by total reflection takes place in the hollow conductor (2, 22, 42; 120, 120'),
- decoupling of the electromagnetic alternating field from the hollow conductor (2, 22, 42; 120, 120') by means of a decoupling device (32, 48, 49;),
- measuring of the absorption of the electromagnetic alternating field through the strand, wherein the electromagnetic alternating field is a microwave field, in particular with a frequency of 5 to 9 GHz, in particular of 5.1 to 6.8 GHz, wherein the frequency of the electromagnetic alternating field does not correspond to a resonance mode.

2. Method according to claim 1, **characterised in that** the electromagnetic alternating field is coupled via an isolator, in particular a circulator (56).

3. Method according to claim 1 or 2, **characterised in that** the electromagnetic alternating field is coupled via a directional coupler (54, 112), wherein in particular in the directional coupler (54, 112) part of the electromagnetic alternating field is branched off and is led as reference from the directional coupler (54, 112) to a measuring apparatus (60, 62, 64), wherein in particular the electromagnetic alternating field decoupled from the hollow conductor (2, 22, 42; 120, 120') for measuring the absorption is compared with the branched part of the electromagnetic alternating field branched off in the directional coupler (54, 112), wherein in particular the electromagnetic alternating field in the hollow conductor (2, 22, 42; 120, 120') is decoupled by means of a coaxial hollow conductor decoupling (49) which is turned by 0°C or 180°C with respect to a coaxial hollow coupling (16, 47).

4. Method according to one of claims 1 to 3, **characterised in that** the measured absorption is converted to a loading of the strand with a quantity of material.

5. Device (20) for measuring the loading of a strand in the tobacco-processing industry, in particular a filter strand, with an additive and/or plasticiser and/or activated carbon, comprising a hollow conductor (2, 22, 42; 120, 120'), a coupling device (10, 28, 46, 47) for coupling an electromagnetic alternating field into the hollow conductor (2, 22, 42; 120, 120') and a decoupling device (32, 48, 49) for the electromagnetic alternating field, wherein the dimensions of the hollow conductor (2, 22, 42 ; 120, 120') are so great with regard to the frequency of an electromagnetic alternating field that forwarding by total reflection takes place in the hollow conductor (2, 22, 42; 120, 120') if the electromagnetic alternating field is a microwave field with a frequency of 5 to 9 GHz, in particular 5.1 to 6.8 GHz, wherein the frequency of the electromagnetic alternating field does not correspond to a resonance mode, wherein the hollow conductor (2, 22, 42; 120, 120') has at least one opening and/or at least one pipe (6, 24, 44) through which the strand can be moved longitudinally to the axis, wherein the hollow conductor (2, 22, 42; 120, 120') is a rectangular hollow conductor (2, 22, 42; 120, 120'), wherein the long side of the rectangular hollow conductor (2, 22, 42; 120, 120') has a length of 30 mm to 40 mm, in particular 34.84 mm, and wherein the short side of the rectangular hollow conductor (2, 22, 42; 120, 120') has a length of 13 mm to 19 mm, in particular 15.76 mm.

6. Device (20) according to claim 5, **characterised in that** the hollow conductor (2, 22, 42; 120, 120'), in particular together with the coupling device (10, 28, 46, 47) and/or the decoupling device (32, 48, 49), forms a closed space for the electromagnetic alternating field.

7. Device (20) according to claim 5 or 6, **characterised in that** the at least one opening or the at least one pipe (6, 24, 44) is arranged, in particular centrally, in one side of the hollow conductor (2, 22, 42; 120, 120'), wherein the direction of the electrical component of the electromagnetic alternating field is parallel to the longitudinal axis of the strand.

8. Device (20) according to one of claims 5 to 7, **characterised in that** the coupling device (10, 28, 46, 47) comprises an isolator, in particular a circulator (56), wherein in particular the coupling device (10, 28, 46, 47) comprises a directional coupler (54, 112), wherein in particular in the directional coupler (54, 112) part of the electromagnetic alternating field is branched off.

9. Device (20) according to one of claims 5 to 8, **characterised in that** a measuring apparatus (60 - 68; 116, 124, 124', 126 - 126", 128) is provided for measuring the decoupled field, wherein in particular a branched part of the electromagnetic field is led as reference to the measuring apparatus (60 - 68; 116, 124, 124', 126 - 126", 128).

10. Device (20) according to one of claims 5 to 9, **characterised in that** the coupling device (10, 28, 46, 47) comprises a coaxial hollow conductor (16, 47) and/or the decoupling device (32, 48, 49) comprises a coaxial hollow conductor decoupling (49), wherein in particular the coaxial hollow conductor decoupling (49) is turned by 0° or 180° with respect to the coaxial hollow conductor coupling (16, 47).

11. Machine, in particular strand machine, in the tobacco-processing industry with a device according to one of claims 5 to 10.

12. Use of a hollow conductor (2, 22, 42; 120, 120') for measuring the loading of a strand in the tobacco-processing industry, in particular a filter strand, with an additive and/or plasticiser and/or activated carbon, in a method according to one of claims 1 to 4.

13. Use of a hollow conductor (2, 22, 42; 120, 120') for measuring the loading of a strand in the tobacco-processing industry, in particular a filter strand, with an additive and/or plasticiser and/or activated carbon, in particular according to claim 12, in a device (20) according to one of claims 5 to 10.

14. Use of a device according to one of claims 5 to 10 in a machine, in particular strand machine, in the tobacco-processing industry, in particular according to claim 11.

## Revendications

1. Procédé pour mesurer la charge d'un tube de l'industrie de transformation du tabac, en particulier d'un tube de filtre, en additif et/ou en plastifiant et/ou en charbon actif, dans lequel le tube est guidé par un guide d'ondes (2, 22, 42, 120, 120') qui est traversé par le boudin, procédé qui comporte les étapes suivantes :
- couplage d'un champ électromagnétique alternatif dans le guide d'ondes (2, 22, 42 ; 120 ; 120') au moyen d'un dispositif de couplage (10, 28, 46, 47), la fréquence du champ électromagnétique alternatif étant suffisamment grande par rapport aux dimensions du guide d'ondes (2, 22, 42, 120, 120') pour qu'il se produise une transmission par réflexion totale dans le guide d'ondes (2, 22, 42, 120, 120'),
- découplage du champ électromagnétique alternatif du guide d'ondes (2, 22, 42 ; 120, 120') au moyen d'un dispositif de découplage (32, 48, 49),
- mesure de l'absorption du champ électromagnétique alternatif par le tube, le champ électromagnétique alternatif étant un champ hyperfréquence, en particulier d'une fréquence de 5 à 9 GHz, en particulier de 5,1 à 6,8 GHz, la fréquence du champ électromagnétique alternatif ne correspondant à aucun mode de résonance.

2. Procédé selon la revendication 1, **caractérisé en ce que** le champ électromagnétique alternatif est couplé au moyen d'un isolateur, en particulier d'un circulateur (56).

3. Procédé selon la revendication 1 ou 2, **caractérisé en ce que** le champ électromagnétique alternatif est couplé au moyen d'un coupleur directif (54, 112), une partie du champ électromagnétique alternatif étant en particulier dérivée dans le coupleur directif (54, 112) et transmise, comme référence, du coupleur directif (54, 112) à un dispositif de mesure (60, 62, 64), où en particulier le champ électromagnétique alternatif découplé du guide d'ondes (2, 22, 42 ; 120, 120'), pour mesurer l'absorption, est comparé à la partie du champ électromagnétique alternatif dérivée dans le coupleur directif (54, 112), le champ électromagnétique alternatif étant en particulier découplé dans le guide d'ondes (2, 22, 42 ; 120, 120') au moyen d'un découplage de guide d'ondes coaxial (49), qui est décalé de 0° ou de 180° par rapport à un couplage de guide d'ondes coaxial (16, 47).

4. Procédé selon l'une des revendications 1 à 3, **caractérisé en ce que** l'absorption mesurée est convertie en une charge du tube par une quantité de matière.

5. Dispositif (20) pour mesurer la charge d'un tube de l'industrie de transformation du tabac, en particulier d'un tube de filtre, en additif et/ou en plastifiant et/ou en charbon actif, comprenant un guide d'ondes (2, 22, 42 ; 120, 120'), un dispositif de couplage (10, 28, 46, 47) servant à coupler un champ électromagnétique alternatif dans le guide d'ondes (2, 22, 42 ; 120, 120') et un dispositif de découplage (32, 48, 49) du champ électromagnétique alternatif, les dimensions du guide d'ondes (2, 22, 42 ; 120, 120') étant suffisamment grandes par rapport à la fréquence d'un champ électromagnétique alternatif pour qu'il se produise une transmission par réflexion totale dans le guide d'ondes (2, 22, 42 ; 120, 120') lorsque le champ électromagnétique alternatif est un champ hyperfréquence présentant une fréquence de 5 à 9 GHz, plus particulièrement de 5,1 à 6,8 GHz, la fréquence du champ électromagnétique alternatif ne correspondant à aucun mode de résonance, le guide d'ondes (2, 22, 42 ; 120, 120') présentant au moins une ouverture et/ou au moins un conduit (6, 22, 44) à travers laquelle ou lequel le tube peut avancer dans la direction de son axe longitudinal, le guide d'ondes (2, 22, 42 ; 120, 120') étant un guide d'ondes rectangulaire (2, 22, 42 ; 120, 120'), le grand côté du guide d'ondes rectangulaire (2, 22, 42 ; 120, 120') ayant une longueur de 30 à 40 mm, en particulier de 34,84 mm, et le petit côté du guide d'ondes rectangulaire (2, 22, 42 ; 120, 120') ayant une longueur de 13 mm à 19 mm, en particulier de 15,76 mm.

6. Dispositif (20) selon la revendication 5, **caractérisé en ce que** le guide d'ondes (2, 22, 42, 120, 120'), en particulier avec le dispositif de couplage (10, 28, 46, 47) et/ou le dispositif de découplage (32, 48, 49), forme un espace fermé pour le champ électromagnétique alternatif.

7. Dispositif (20) selon la revendication 5 ou 6, **caractérisé en ce que** l'ouverture, au moins au nombre de une, ou le tube, au moins au nombre de un, (6, 24, 44) est disposé(e) en particulier au milieu d'un côté du guide d'ondes (2, 22, 42, 120, 120'), la direction de la composante électrique du champ électromagnétique alternatif étant parallèle à l'axe longitudinal du tube.

8. Dispositif (20) selon l'une des revendications 5 à 7, **caractérisé en ce que** le dispositif de couplage (10, 28, 46, 47) comprend un isolateur, en particulier un circulateur (56), le dispositif de couplage (10, 28, 46, 47) en particulier comprenant un coupleur directif (54, 112), une partie du champ électromagnétique alternatif étant dérivée en particulier dans le coupleur directif (10, 54, 112).

9. Dispositif (20) selon l'une des revendications 5 à 8, **caractérisé en ce qu'**un dispositif de mesure (60 - 68 ; 116, 124, 124', 126 - 126", 128) est prévu pour mesurer le champ découplé et qu'en particulier une partie dérivée du champ électromagnétique est transmise comme référence au dispositif de mesure (60 - 68 ; 116, 124, 124', 126 - 126", 128).

10. Dispositif (20) selon l'une des revendications 5 à 9, **caractérisé en ce que** le dispositif de couplage (10, 28, 46, 47) comprend un couplage coaxial de guide d'ondes (16, 47) et/ou le dispositif de découplage (32, 48, 49) comprend un découplage coaxial de guide d'ondes (49), le découplage coaxial de guide d'ondes (49) en particulier étant décalé de 0° ou de 180° par rapport au couplage coaxial de guide d'ondes (16, 47).

11. Machine, en particulier machine à confectionner des tubes, de l'industrie de transformation du tabac, comprenant un dispositif selon l'une des revendications 5 à 10.

12. Utilisation d'un guide d'ondes (2, 22, 42 ; 120, 120') pour mesurer la charge d'un tube de l'industrie de transformation du tabac, en particulier d'un tube de filtre, en additif et/ou en plastifiant et/ou en charbon actif, dans un procédé selon l'une des revendications 1 à 4.

13. Utilisation d'un guide d'ondes (2, 22, 42 ; 120, 120') pour mesurer la charge d'un tube de l'industrie de transformation du tabac, en particulier d'un tube de filtre, en additif et/ou en plastifiant et/ou en charbon actif, en particulier selon la revendication 12, dans un dispositif (20) selon l'une des revendications 5 à 10.

14. Utilisation d'un dispositif selon l'une des revendications 5 à 10 dans une machine, en particulier une machine à confectionner des tubes, de l'industrie de transformation du tabac, en particulier selon la revendication 11.
